# EUROPEAN PATENT SPECIFICATION

(11) **EP 4 373 591 B1**
(45) Date of publication and mention of the grant of the patent: **27.05.2026**
(21) Application number: 22845543.2
(22) Date of filing: 21.07.2022
(51) Int. Cl.: A63B 69/12, E04H 4/00

(54) **A WAVE GENERATING INSTALLATION AND METHOD**
WELLENERZEUGUNGSANLAGE UND -VERFAHREN
INSTALLATION DE GÉNÉRATION D'ONDE ET PROCÉDÉ

(30) Priority: 23.07.2021 ZA 202105213
(43) Date of publication of application: 29.05.2024
(73) Proprietor: Calitz, Peter, Benjamin, 6000 Port Elizabeth (ZA)
(72) Inventor: Calitz, Peter, Benjamin, 6000 Port Elizabeth (ZA)
(74) Representative: HGF
(86) International application number: PCT/IB2022/056729
(87) International publication number: WO 2023/002420

(56) References cited:
- WO-A1-2008/147508
- WO-A1-2008/147508
- WO-A2-2020/086620
- WO-A2-2020/086620
- US-A1- 2012 255 112
- US-A1- 2014 000 020
- US-A1- 2014 115 769

## Description

### FIELD OF INVENTION

This invention relates broadly to artificial wave generation and specifically to a wave generating installation and method (e.g., for use in water sports or recreation).

### BACKGROUND OF INVENTION

The Applicant is aware of an existing installation by Wave Gardens (a Spanish company) which has experimented with artificial waves using a rotating platform (generally referred to as a carousel) with at least one ramp or vane to act as a wave former. The installation is placed in a large body of water (like a lake or pool) and the carousel rotates, driving the wave former through the water. As the wave former slews through the water, it creates a wave (with a snowplough-like effect).

A drawback of this installation is that it would create significant turbulence and currents surrounding the carousel in the direction in which the carousel rotates, eventually causing the surrounding water to start rotating too, like a large whirlpool. As the water rotates, the relative speed between the wave former and the water decreases (and approaches zero as the whirlpool speed approaches the carousel speed) which decreases the wave creation action. This could perhaps be countered by providing large pumps or water jets to counteract the whirlpool effect, but this would increase cost and complexity of the installation.

The Applicant desires a wave generating installation which overcomes or ameliorates this drawback.

The Applicant is aware of WO2008147508 (D1) which discloses a device for generating and maintaining a standing wave face capable of being ridden by an individual. The device includes a container having a base wall and a sidewall and containing a fluid, at least one inlet into the container, and means for imparting a combination of rotational and vertical velocity to a fluid with-in the container.

### SUMMARY OF INVENTION

Accordingly, the invention provides a wave generating installation configured to generate a wave in water, the installation including:
a carousel configured to rotate about an upright axis of rotation;
at least one wave former fixed relative to the carousel and therefore configured to rotate with the carousel, wherein the wave former is configured to form an incoming stream of water into a standing wave;
a water outlet spaced away from the wave former, the water outlet being configured to direct a stream of water over part of the carousel towards the wave former; and
at least one water pump connected via a water conduit to the water outlet, thereby to produce the stream of water,
wherein the installation is configured to direct the stream of water over the rotating carousel towards the wave former, thereby to generate the wave which is a standing wave relative to the carousel but which rotates with the carousel.

The term "standing wave" in the context of this specification may include a hydraulic jump wave (as is more conventional) and/or may include sheet-flow of water over a formation to create a mound with a wave-like appearance (even though it might not conform to a conventional definition of "wave" or "standing wave" ).

The water outlet may be configured to rotate with the carousel, such that the stream of water remains directed at the wave former while the carousel rotates.

The wave former may be provided at a periphery of the carousel. The water outlet may be provided at a centre of the carousel inwardly of the wave former and is configured to direct the stream of water outwardly towards the wave former.

Water flow may be directed from the carousel centre outwards, or may be directed backwards relative to the carousel direction of rotation, or may be directed from the carousel perimeter inwards, towards the wave former.

The water outlet may be elongate and may be provided on the carousel between a centre and a periphery thereof. The wave former may also be provided on the carousel between a centre and a periphery thereof, the water outlet being configured to direct the stream of water circumferentially towards the wave former.

The installation may include plural water outlets and plural wave formers spaced circumferentially apart. The water outlets may be configured to direct respective water streams to the wave formers. The plural water outlets and plural wave formers may be equiangularly spaced apart.

The water outlet may be configured to create sheet flow of water over a water flow zone of the carousel arranged between the water outlet and the wave former.

Water flow may provide adequate energy to counteract wave stall and to off-set the whirlpool effect in the pool, and the water flow may be blended with pool water crossing the wave former, or water crossing over the wave former may be substantially composed of water from the nozzle.

The carousel may define at least one raised zone rotationally adjacent to the water flow zone, the water flow zone being in the form of a trough being depressed or lowered compared to the adjacent raised zone. The raised zone may be a water displacement zone and may be considered as a "travelling reef".

The water outlet may emit water around most or all of a rotational area of the carousel, but the stream of water directed towards the wave former may include more water than water emissions not directed to the wave former, e.g., more water per unit area. The water not directed towards the wave former may be considered spill water and may also counter-act the whirlpool effect.

The stream of water may have a positive flow rate and a raised pressure head upon being emitted from the water outlet. Raised pressure head may imply pressurised or pumped. The carousel may be configured to energise the stream of water additionally by downward gravitational flow and/or by Coriolis effect, but pumped flow may create the raised water level and energy potential for gravity flow.

The wave generating installation may include a hub at a centre of the carousel. The hub may be integrated with or fixed to the carousel, the hub thereby being configured to rotate with the carousel. The carousel may be displaceable relative to the hub and the hub may be fixed, the carousel thus being configured to rotate around the hub. The hub may accommodate the water outlet. Alternatively, the hub may be void of any carousel structure and may therefore be an inner part of the pool surrounded by the ring-shaped carousel.

The water outlet may be on or in the carousel.

The carousel may be circular or annular (or approximately so, like oval). The carousel may be of rigid and/or flexible material. The carousel may include bladder structures. The carousel may include an underlying support structure over which a skin or membrane is supported.

The wave generating installation may include a pool housing a body of water. The carousel may be provided in the pool. The stream of water may be drawn from the body of water and tail water may return to the body of water, in a circular and repeating loop. The carousel may be partially or fully immersed in the body of water.

The wave generating installation may include at least one hyperbaric seal provided between the carousel and the body of water. One or more air chambers may be provided beneath the carousel, separated from the body of water by the hyperbaric seal. The air chambers may be pressurised, e.g., to atmospheric pressure relative to the water depth at which the seal is located.

The pump (independent of the carousel or integrated within the carousel) may include vanes (or similar structures like scoops or fins) attached to the carousel, such that rotation of the carousel in or on the body of water causes a pumping action. The vanes may be separate from the wave former. The vanes may be attached to a side or underside of the carousel. The vanes may be considered rotary vanes because they rotate with the carousel. The installation may include complemental static vanes. The static vanes may be mounted to the pool or other support structure, e.g., adjacent to or opposed to the rotary vanes. This may resemble a Jonval turbine (https://en.wikipedia.org/wiki/Jonval turbine) operated either normally or in reverse.

This pumping action may be derived from the rotation of the carousel but be separate from the wave making action. In other words, different structures may be responsible for wave making (the wave former) and pumping (the vanes). However, both structures may derive motive power from the same source, that is, rotation of the carousel.

The water conduit may be, or may include, spiral scroll water supply structures provided beneath or in the carousel. The water supply structures may conduct water from the vanes, where it is pumped, to the water outlet, where it is emitted.

The installation may include a motor configured to rotate the carousel. The installation may include associated parts, like bearings, axles, or gearboxes, etc. to couple the motor to the carousel. The motor may be an electric motor.

The pump may be a standalone device, like an electrically powered pump. The pump may be an axial flow or centrifugal pump. The water conduit may then be a pipe or duct between the pump and the water outlet.

The wave former may continuously channel head flow water lifting and shaping it into the wave. The wave may be orientated towards, or away from, or radially of an inside of the carousel, resulting in inward (concave) or outward (convex) wave shapes. The wave former for centre head-flow discharge versions may be orientated at an acute angle, relative to a carousel direction of rotation. The wave former may be fixed or deformable, hard or soft.

The water outlet may be configured to direct the stream of water in a direction which, at least partially, opposes a direction of rotation of the carousel. This may counter a whirlpool effect.

The generated wave may be used for water sports or recreation, like surfing, boarding, paddling, swimming, playing, etc.

Centrifugal force above 20% may be undesirable for surfing, so an 8 m radius carousel should have an outer velocity below 4 m/s (4.7 rpm), where a 50 metre radius carousel may have an outer velocity up to 10 m/s (1,9rpm). It follows that velocity may be a limitation to wave size and therefore bigger carousels may have bigger waves due to their tolerable speed range. Water flow volumes may be determined by a flowrate where the velocity of water flow may be higher than the carousel perimeter velocity. Each wave former may easily manage a flow rate of 10 cubic metres per second.

The invention extends to a method of generating a wave in water, the method including:
rotating a carousel about an upright axis of rotation;
providing at least one wave former fixed relative to the carousel and therefore configured to rotate with the carousel;
pumping, with at least one water pump via a water conduit, water to the water outlet, thereby to produce the stream of water;
directing the stream of water from the water outlet, which is spaced away from the wave former, over part of the carousel towards the wave former; and
forming, by the wave former, the stream of water into a standing wave relative to the carousel but which rotates with the carousel.

### BRIEF DESCRIPTION OF DRAWINGS

The invention will now be further described, by way of example, with reference to the accompanying diagrammatic drawings.

In the drawings:
- **FIG. 1**: shows a schematic plan view of a first embodiment of a wave generating installation, in accordance with the invention;
- **FIG. 2**: shows a schematic cross-sectional view of the wave generating installation of FIG. 1;
- **FIG. 3**: shows a schematic plan view of the wave generating installation of FIG. 1 including a pool;
- **FIG. 4**: shows a schematic cross-sectional view of the wave generating installation of FIG. 3;
- **FIG. 5**: shows a schematic plan view of a second embodiment of a wave generating installation, in accordance with the invention;
- **FIG. 6**: shows a schematic plan view of a third embodiment of a wave generating installation, developed from that of FIG. 5;
- **FIG. 7**: shows a schematic cross-sectional view of another embodiment of a wave generating installation, developed from that of FIG. 2;
- **FIG. 8**: shows a schematic cross-sectional view of another embodiment of a wave generating installation, developed from that of FIG. 2;
- **FIG. 9**: shows a schematic plan view of another embodiment of a wave generating installation, in accordance with the invention;
- **FIGS 10-12**: show schematic cross-sectional views of further embodiments of wave generating installations, in accordance with the invention;
- **FIG. 13**: shows a schematic cross-sectional view of another embodiment of a wave generating installation, in accordance with the invention;
- FIG. **14**: shows a schematic plan view of part of the installation of FIG. 13; and
- **FIG. 15**: shows a schematic plan view of another embodiment of a wave generating installation, in accordance with the invention.

### DETAILED DESCRIPTION OF EXAMPLE EMBODIMENT

The following description of an example embodiment of the invention is provided as an enabling teaching of the invention. Those skilled in the relevant art will recognise that changes can be made to the example embodiment described, while still attaining the beneficial results of the present invention. It will also be apparent that some of the desired benefits of the present invention can be attained by selecting some of the features of the example embodiment without utilising other features. Accordingly, those skilled in the art will recognise that modifications and adaptations to the example embodiment are possible and can even be desirable in certain circumstances and are a part of the present invention. Thus, the following description of the example embodiment is provided as illustrative of the principles of the present invention and not a limitation thereof.

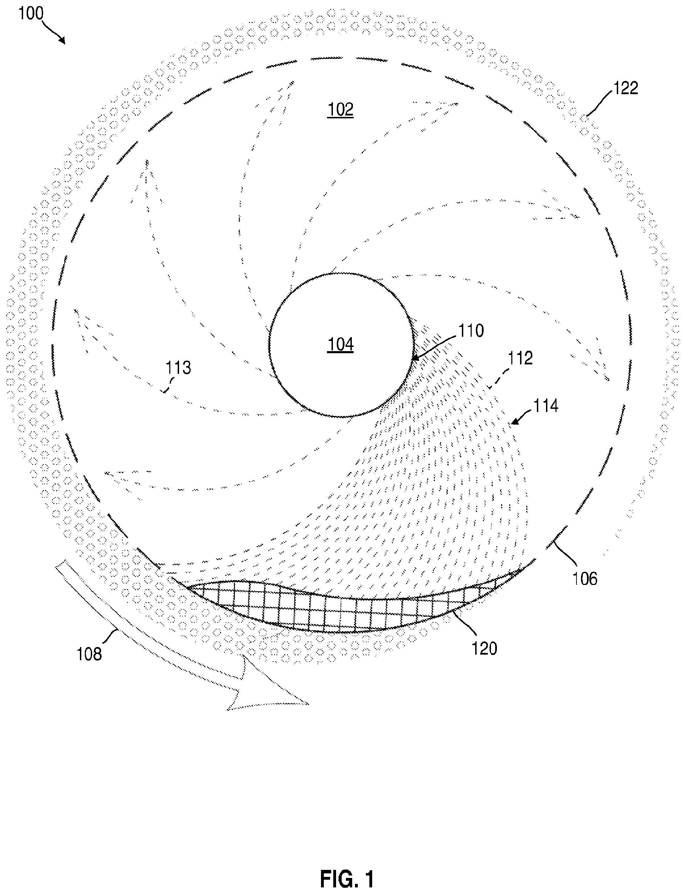

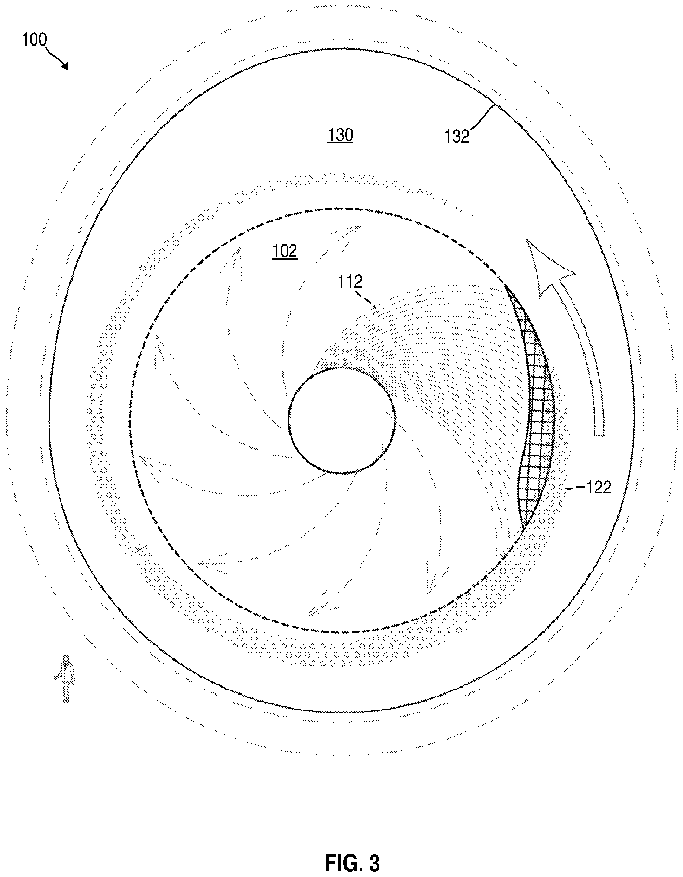

FIG. 1 illustrates a basic wave generating installation 100 in accordance with the invention. The installation has a circular carousel 102 with a central hub 104 and a peripherally extending outer edge 106. The carousel 102 is mounted to rotate about a central upright axis and may be driven by a motor or other drive means (not illustrated). The carousel 102 is provided in a body of water (see, e.g., FIG. 3).

A water outlet 110 is provided at, or underneath, the hub 104. The water outlet 110 is not specifically illustrated in FIG. 1 (but see description and FIGS below). The water outlet 110 is configured to emit a stream of water 112 over part of the carousel 110 designated as a water flow zone 114. The presence of the water outlet 110 is an important part of this embodiment and may serve as one of the features to distinguish this embodiment inventively from prior art installations. The stream of water 112 over the water flow zone 114 may be smooth or coherent flow, like sheet flow, or even laminar flow.

The carousel 102 has a wave former 120 which, in this embodiment is elongate and extends tangentially along the outer edge of the carousel 102. The wave former 120 is in the form of a ramp or curved fin. The water outlet 110 is configured to direct the stream of water 112 towards the wave former 120 which, in turn, redirects flow to convert the stream of water 112 into a wave (or wave-like formation). It will thus be noted that it is the action of the stream of water 112 interacting with the wave former 120 that creates the wave, and not (or at least, not primarily) the action of the carousel 102 rotating in a larger body of water - as is the case with prior art installations - which creates the wave.

It may be noted that the water outlet 110 is not radially aligned with the wave former 120 but is rotationally offset. This compensates for the rotation of the carousel 102 which may cause the stream of water 112 to curve at it radiates outwardly - as noted in the FIG. 1 having curved lines illustrating the stream of water 112. This may be due to inertia of the stream of water 112 on the rotating carousel 102 (e.g., the Coriolis effect).

Depending on the configuration of the water source 110 and/or the hub 104, there may be spill water 113 emitted from the water source 110 and/or the hub 104 not directed towards the wave former 120. This may be the case, for example, when the hub 104 includes a 360° circular nozzle configured to discharge water 360° around and the water source 110 is, or includes, a rotating aperture to direct the water towards the wave former 120 and occludes but does not entirely block it in the remaining arc.

Tail water 122 from the wave is directed or dissipated outwardly from the outer edge 106 of the carousel 102 and returns to the body of water. As this tail water 122 is dissipative, it does not contribute significantly to any whirlpool effect within the body of water. Further, as the wave generating action is as a result of the stream of water 112 interacting with the wave former 120 and not as a result of the wave former slewing/ploughing through the body of water, the wave creation action does also not contribute significantly towards any whirlpool effect.

The carousel 102 itself may be streamlined for gliding through surrounding water and not itself displacing significant water through rotation. The wave former 120 may displace the water (specifically, the stream of water 112) which may be offset the incoming water sourced by the water outlet 110.

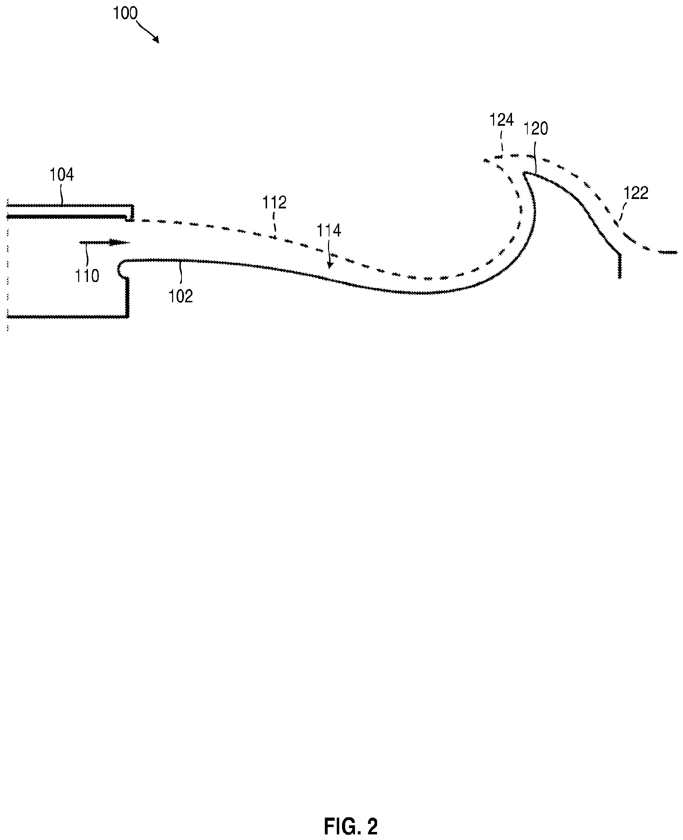

FIG. 2 shows a cross-sectional view of the installation 100. As mentioned above, the water outlet 110 may not always be radially aligned with the wave former 120 - this FIG shows them as being aligned for the sake of illustration, but this could be an offset sectional view.

It is more clearly illustrated that the stream of water 112 is emitted from the water source 110 and directed over the water flow zone 114 of the carousel 102 towards the wave former 120. The wave former 120, in turn, converts the stream of water 112 into a wave 124. The characteristics of the wave 124 (e.g., large, barrel, curl, etc.) may largely be dictated by the shape of the wave former 120 but also by the characteristics of the stream of water 112. The wave 124 dissipates as the tail water 122 returns to the body of water.

The wave 124 is a standing wave relative to the carousel 102. In other words, with the carousel 102 as a point of reference, the wave 124 will be somewhat static in its overall shape. As the carousel 102 rotates in use, the wave 124 can therefore be described as a standing wave rotating with a periphery of the carousel 102. This may be beneficial in that it has the benefits of a standing wave (e.g., being able to support a surfboard or wave board in a reliable way) while still having the effect of moving through the water.

FIG. 3 illustrates the carousel 102 in a body of water 130 provided by a pool 132, lake, or similar structure (whether artificial or natural). If the size of the pool 132 needs to be minimised, it can be configured to be round or oval and somewhat larger, but not significantly so, than the carousel 102 (as in FIG. 3). However, various different creative embodiments are practicable (see below).

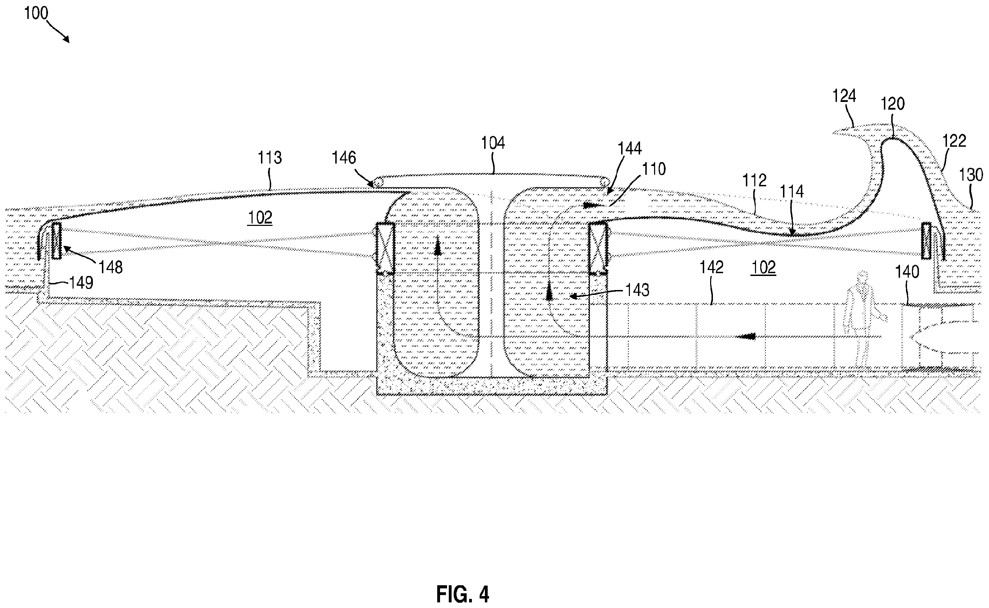

FIG. 4 shows a more complete illustration of the wave generating installation 100. A water pump 140 is provided which, in this embodiment, is underneath (at a lower level than) the carousel 102; the pump 140 is either in the body of water 130 in the pool 132 or in fluidic communication therewith. Although various pump embodiments may be practicable, this pump 140 is an electrically powered axial flow pump. A water conduit in the form of a large capacity pipe or duct 142 is provided to direct pumped water from the pump 140 towards the hub 104.

The pipe 142 leads into a cavity 143 beneath the hub 104 which is largely hollow. The hub 104 defines a traveling aperture 144 which rotates together with the carousel 102 thereby to maintain a fixed angular alignment relative to the carousel 102 (and hence relative to the wave former 120. The aperture 144 serves as the water outlet 110 for directing the stream of water 112 towards the wave former 120. Alternatively, a fixed-in-place hub island with its outer edge as a uniform annular upper-lip to nozzle while the lower lip/floor is the moving carousel surface, having bathymetry with shallow regions either side of a deeper opening which defines the main water flow nozzle.

In this embodiment, the hub 104 actually provides a 360° water discharge. A more substantial volume of water is channelled through the aperture 144 serving as the water outlet 110, but spill water 113 is channelled out of a narrow gap 146 between the hub 104 and the carousel 102 in other areas not aligned with the wave former 120. This spill water 113 may have a lower head or a lower volume per unit width compared to the stream of water 112, thus not requiring significantly more pumping capacity.

The installation 100 may include a mechanical motor (not illustrated) to rotate the carousel 102 at a desired speed. The output of the motor and/or the pump 140 may be customisable to control operational characteristics, e.g., wave generating characteristics, of the installation 100.

While the carousel 102 may be configured to be supported on top of the body of water 130, in this example, it is not, instead having its underside sealed off from the body of water 130. More specifically, an annular contactless hypobaric seal assembly 149 is provided around, e.g., depending downwardly from, the periphery of the carousel 102 to interact with a complemental upstanding formation 149 (like a fin or wall) provided in the pool 132 in which the carousel 102 is located. This may have various advantages including lowering a rotational drag of the carousel 102, reducing any whirlpooling effect in the body of water 130, etc. With such a configuration, the carousel 102 may be a relatively thin or light structure which need not necessarily even have a bottom wall.

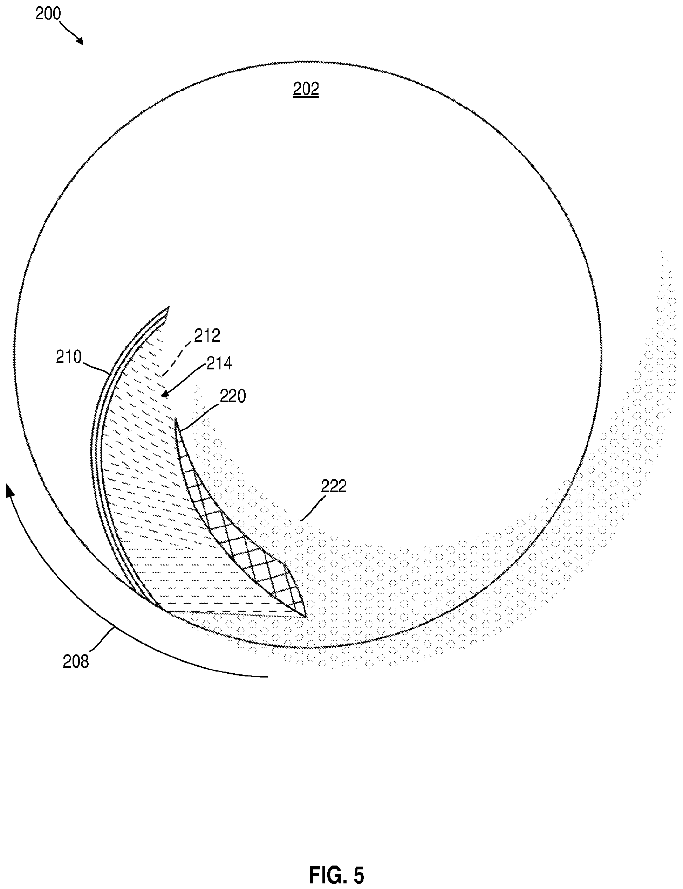

FIG. 5 illustrates another embodiment of a wave generating installation 200 in accordance with the invention. The same or similar numerals to those in other FIGS may refer to the same or similar parts. This installation 200 employs the same principle as the previous installation 100, but has a different implementation.

More specifically, a water outlet 210 and wave former 220 extend somewhat radially (or obliquely) and are circumferentially aligned and spaced apart. The water outlet 210 is elongate and arcuate and configured to emit a stream of water 212 in a generally circumferential direction, across a water flow zone 214, opposite to a direction of rotation 208 of the carousel 202. The water outlet 210 may be in the form of an elongate slot or nozzle, outputting the stream of water 212 generally as a sheet which is maintained across the water flow zone 214. The direction of the stream of water 212 may oppose the direction of rotation 208, which may enhance wave generating characteristics or reduce whirlpooling in the body of water 130, etc.

The wave former 220 is orientated somewhere between radial and circumferential and can be characterised as oblique or rearwardly swept. Its angle relative to a radius may be varied to influence characteristics of a wave which it produces. Tail water 222 again runs off from behind the wave former 220.

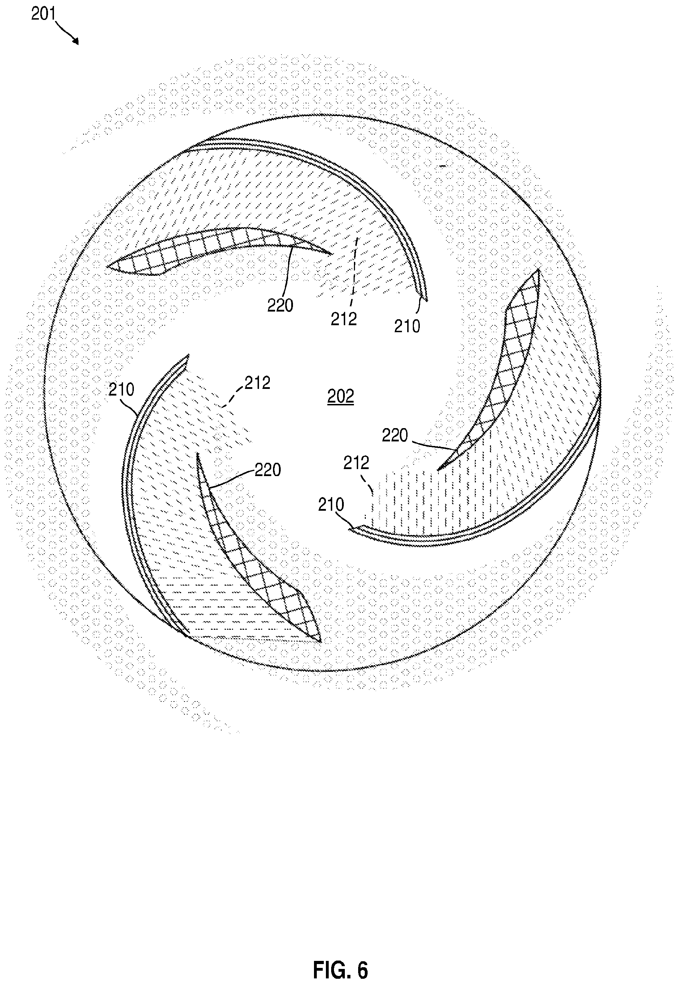

FIG. 6 illustrates a developed version 201 of the wave generating installation 200 which has three equiangularly spaced sets of water outlets 210 and wave formers 220. The installation 201 with plural sets of water outlets 210 and wave formers 220 may be beneficial in being able to produce more waves (three times as many, in this example) for the same carousel footprint.

Applying this logic to the installation 100 of FIGS 1-4, there could be plural water outlets 110 directed respectively towards plural wave formers 120 (not illustrated). In fact, plural water outlet-wave former combinations may even be desired because, if rotationally symmetrical, this may provide better centricity of the carousel 102 for smoother rotation or lower rotational energy input.

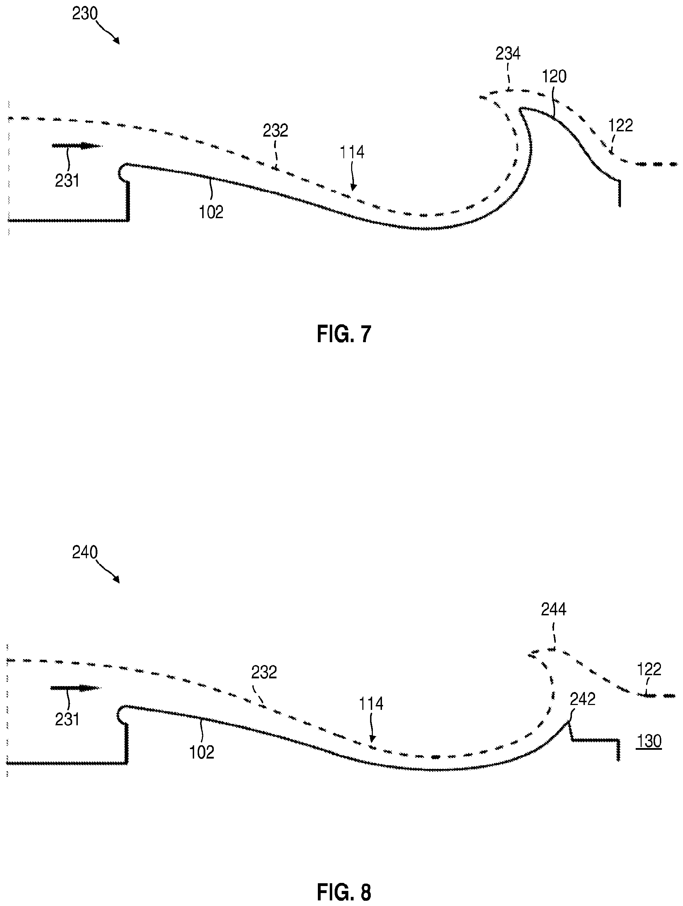

FIGS 7-8 show different wave former configurations. In FIG. 7, a wave generating installation 230 lacks the hub 104 present in the earlier installation 100. This lack of a hub may provide for a water outlet 231 providing a stream of water 232 having different characteristics. For example, the water outlet 231 may be provided from a raised head or pressurised source of water to swell onto the water flow zone 114 of the carousel 102, instead of being jetted or jettisoned via a nozzle. This may allow the stream of water 232 to be deeper and/or slower which may provide a wave 234 with different characteristics.

In FIG. 8, an installation 240 is still hubless, but also has a wave former 242 having reduced height compared to the wave former 120 of previous installations 100, 230. A wave 244 may be formed by a hydraulic jump having more open water flow. The wave former 242 may work with largely stationary water in the body of water 130 behind providing a wave-forming bathymetry. The wave 244 may have different characteristics (e.g., height, curl, barrel) from the other waves 124, 234 being formed by a slightly different hydraulic jump interaction.

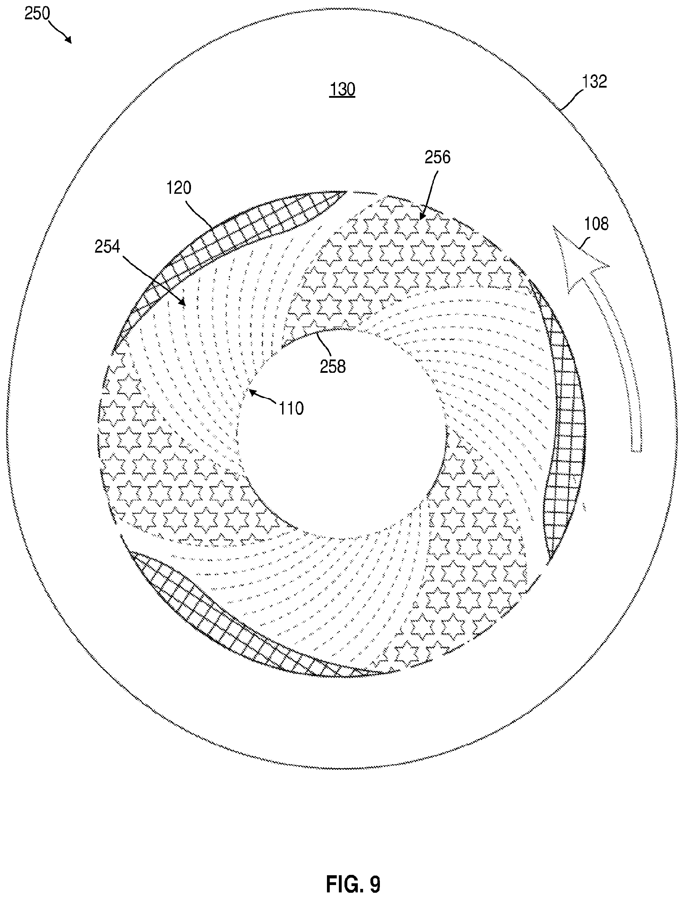

FIG. 9 illustrates a wave generating installation 250 with the wave formers 120 of the installation 100 of FIG. 1, but having three such wave formers 120 spaced 120° apart around the carousel 102. Notably, however, there are more distinct water zones 254, 256. A water flow zone 254 arranged between the water outlet 110 and the wave former 120 is deeper, like a trough. However, water displacement zones 256 are circumferentially spaced between the respective water flow zones 254 and are shallower, that is, raised relative to the water flow zones 254.

Conceptually, the water displacement zones 256 may be considered reef zones or travelling reefs, in use. The water displacing zones 256 are configured to displace water flow by having only a very shallow/thin flow over these zones 256 and a relatively low flow volume compared to the deeper, adjacent water flow zones 254. The water displacement zones 256, together with the wave formers 120, may also substantially bar pool water 130 from flowing into the advancing water flow zones 254. The water displacing zones 256 may be back-swept in plan view to deflect unwanted water away from the water flow zones 254, and an inside boundary 258 may work as weir containment at leading and trailing boundaries of openings of the water outlets 110 where deeper water flows out into the water flow zones 254.

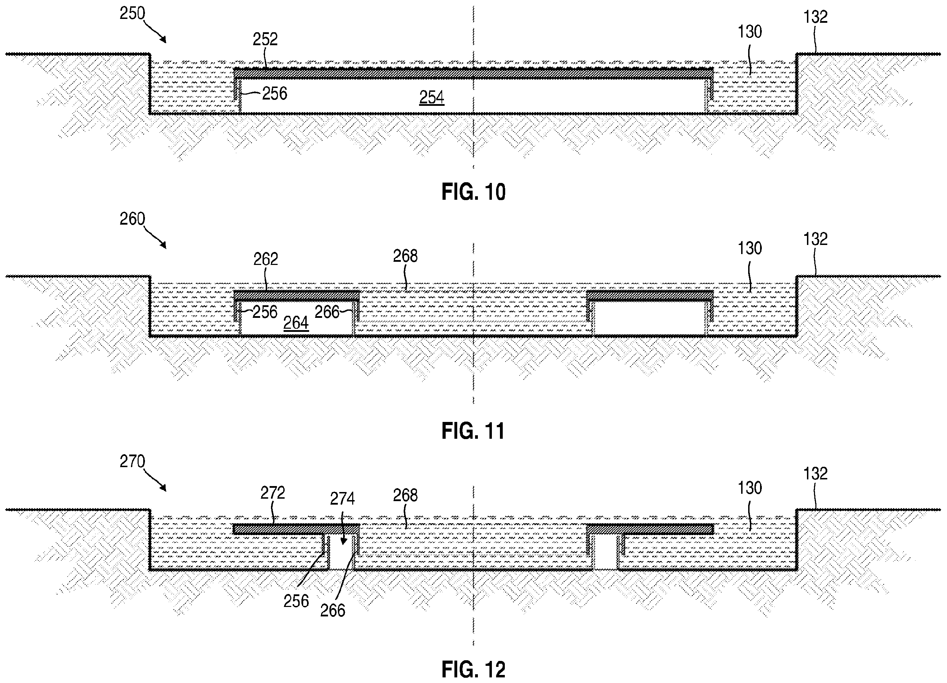

FIGS 10-12 show various installations 250, 260, 270 with carousel configurations providing hyperbaric chambers which may allow for hyperbaric or barometric seals. In FIG. 10, a carousel 252 is configured to have a hollow cavity 254 underneath. The cavity 254 is pressurised above atmospheric pressure in proportion to the water depth within the seal. An outer air trap water seal (or hyperbaric seal) 256 is provided around a periphery of the carousel 252. The pressurised, hollow cavity 254 displaces pool water 130, thereby creating a dry space optionally within which to house mechanical and structural components of the carousel 252 such as but not limited to drive train and slewing carriage.

The cavity 254 also reduces water drag during rotation of the carousel 252 and reduces load on the carousel undercarriage. To overcome excessive lift, the seal 256 and the cavity 254 create a water level at a depth where consequent air pressure is balanced against the overall weight of the carousel 252 in live loads such as possible suction caused by water flow.

FIG. 11 illustrates an installation 260 with an annular carousel 262 having a differently shaped cavity 264 and an inner pool or water area 268. A pair of seals 256, 266, namely the outer seal 256 and an inner seal 266 may be provided. In FIG. 12, the installation 270 also has an annular carousel 272 but it has an overhang and therefore a much smaller cavity 274 but operates on the same principle.

The installation 250, 260, 270 of FIGS 10-12 may provide that the carousel 252, 262, 272 remains as neutrally buoyant as possible, and may take advantage of the lifting force provided by the compressed air where this is structurally and mechanically beneficial. Features of the cavity 254, 264, 274 may include means for access such as hatch access from directly above via vertical air lock, or underpass access below the pool via air lock. Access may alternatively require that air pressure is released prior to entering from above or below. The hyperbaric system may include a labyrinth contactless seal or may have slewing seals similar to those found on bearing races.

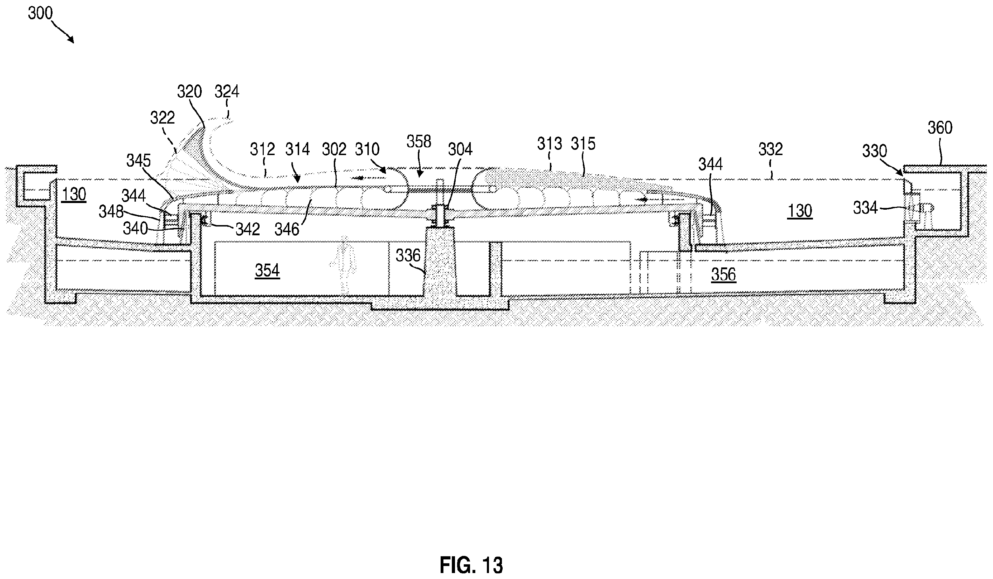

FIG. 13 illustrates a more developed version of a wave generating installation 300 in accordance with the invention. While having a separate electrically powered water pump is an option, this installation 300 employs carousel rotation to create pumping action, as will become apparent.

The installation 300 has a generally circular or annular carousel 302 (similar in shape to those of previous embodiments). More specifically, the carousel 302 comprises a bladder-like outer membrane tensile structure on a marine grade GMS carousel wheel supporting frame.

A hub assembly 304 supports the carousel 302 and permits it to rotate about an upright axis of rotation. Drive means (not illustrated) to rotate the carousel 302 may include a pin-wheel gear to mounted to outer compression ring or inner tension ring hub. The hub assembly 304 is mounted to a concrete support structure 336. The hub assembly 304 comprises a slewing hub with a bearing and seal system.

The carousel 302 is accommodated in a body of water 130 and a small central pool 358 is provided above the hub assembly 304. A wave former 320 is provided at a periphery of the carousel 302. The wave former 320 is in the form of a mound presenting a concave surface to a stream of water 312 thereby to create a wave 324. Tail water 322 runs off from the wave 324 to return to the body of water 130.

As with previous embodiments, a water outlet 310 in the form of a discharge nozzle emits the stream of water 312 as sheet flow over a water flow zone 314 of the carousel 302. This water flow zone 314 is depressed relative to an opposite water displacing zone 315 above which spill water 313 is permitted to stream. The water displacing zone 315 is raised and may be embodied by a soft foam or water-filled membrane bladder having a back-swept spiral plan form.

A water level 332 of the body of water 130 is configured to overflow into weirs 330. The weirs 330 may cover a majority (more than 50%) of a perimeter of the pool. The weirs 330 may be covered with protective grates. Surrounding the pool may be paving, a deck 360, or the like, for cosmetic or recreational purposes. A recirculating pump 334 may be integrated with the weir 330 to drop the weir water level lower than the pool water allowing small waves in the pool to collapse into the weir, to permit the pool water surface to remain relatively calm.

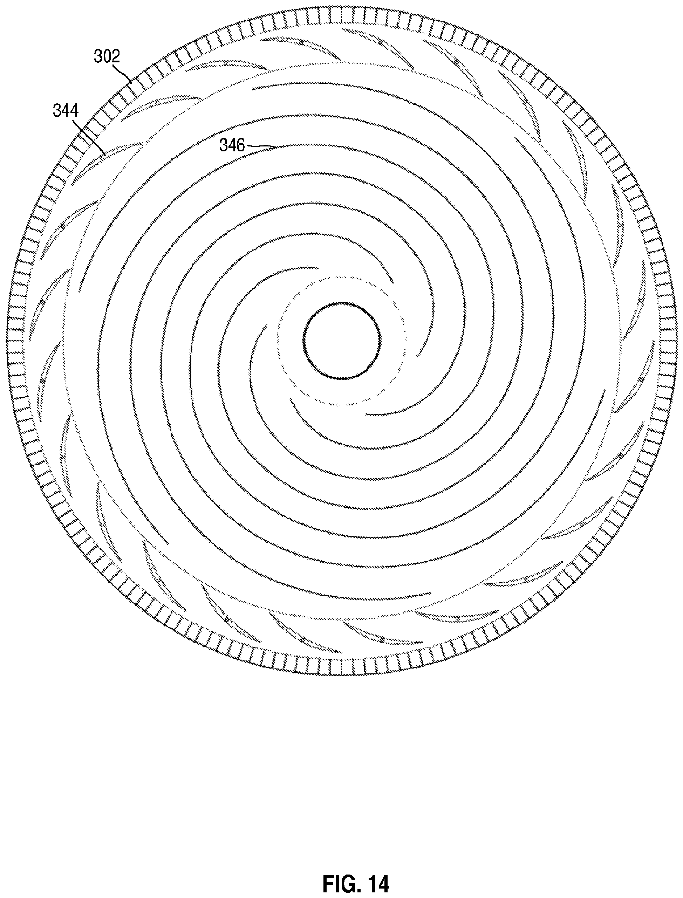

Important to this embodiment, and referring now also to FIG. 14, the carousel 302 has a plurality of vanes 344 arranged at a periphery thereof. The presence of the vanes 344 permit the carousel 302 to act also as a water pump (e.g., similar to a Jonval turbine in reverse). Water pumped from the vanes 344 is channelled via conduits in the form of inward spiral scroll water supply structures 346 which may be rigid or flexible membrane bladder structures. These water supply structures 346 feed the pumped water to the water outlet 310 which emits the water as the stream of water 312 across the water flow zone 314.

The installation 300 may include one or more co-axial corresponding stator vane arrays which may be fixed to a stator vane support structure 348, and additionally or alternatively may have one or more counter-rotating co-axial impeller arrays mounted on the carousel 302 or on the ground structure. Said vane arrays may be orientated for axial or for radial pumping and are located co-axially anywhere on, or within, or in proximity to, the carousel 302.

The carousel 302 includes a rail and bearing assembly 342 to help support and guide its rotation as well as an air trap water seal 340. This provides a substantially dry space 354 beneath the carousel 302 for mechanical equipment and maintenance access, maintained by air pressure and partitioned by coffer dam walls. Accordingly, the installation 300 may be considered a hyperbaric carousel (like those in FIGS 10-12). A cistern 356 may collect and hold pool water when air pressure is lost causing water to drain through the air seal 342.

The installation 300 may have rigid, hollow structures 345 to carry the wave formers 320 and to form a diverging component of contactless venturi seal, combined with diffuser vanes.

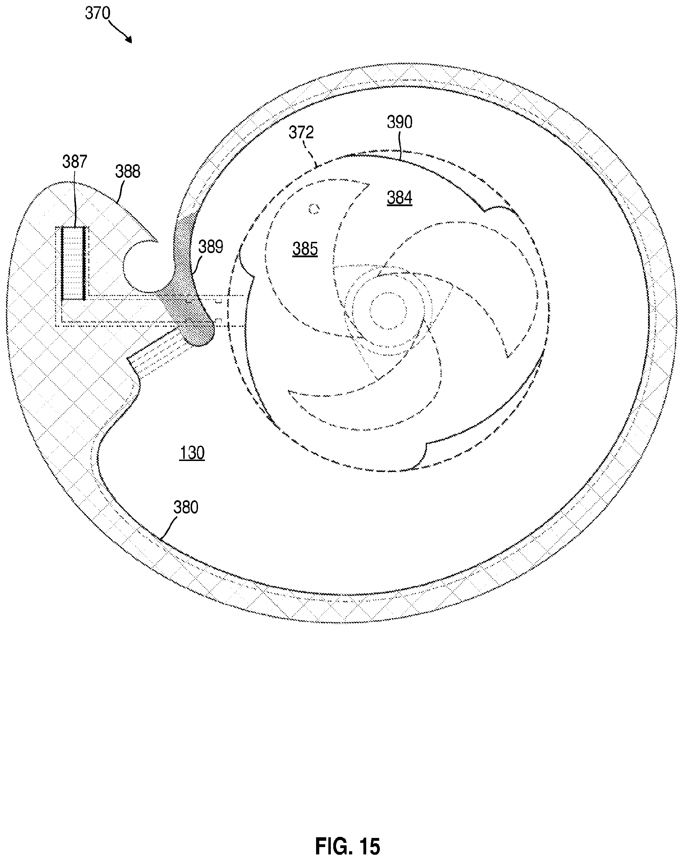

FIG. 15 illustrates a further wave generating installation 370 in accordance with the invention. The installation 370 comprises a rotary carousel 372 having a bladder-like outer membrane tensile structure, bicycle wheel type supporting frame, and means to force rotation which may include a pin-wheel gear to the outer compression ring or inner tension ring hub. Wave formers 390 are at a periphery of the carousel 372.

The carousel 382 may have the same vane and water conduit structure 344, 346 (in FIG. 14) as that of the installation 300.

Water flow zones 384 having sheet flow water are ahead of traveling wave formers 390 and water displacement zones 385 in the form of "travelling reefs" are provided in between. The water displacement zones 385 may be soft foam or water-filled membrane bladders having a back-swept spiral plan form and being raised to form a blockage to water-flow which funnels head-water towards the water flow zone 384 and may direct pool water away from water flow zone 384.

The installation 370 has a weir perimeter rim-flow water discharge 380 which may be to a majority (more than 50%) of the pool perimeter. A stairwell 387 connects an airlock with a pool deck 388 and surrounding area. A moat structure 389 substantially blocks water passage and lazy-river from forming in ring-shaped pools.

The Applicant believes that the invention as exemplified provides an installation which can create usable artificial waves. Advantages include:
A standing wave (or pseudo-standing wave) is provided, but this wave moves with the carousel.
The wave former does not create a wave by ploughing through the pool water. This reduces whirlpooling.
The water outlet provides the water for the wave, meaning the wave-generating water supply can be separately controlled.
Characteristics (length, inclination, curvature, height, etc.) of the wave former can be configured which will not impact on other aspects (e.g., carousel rotation) of the installation.
In one embodiment, the pumping action for the water outlet and can be provided by the rotation of the carousel by adding a vane assembly.
Various hyperbaric carousel configurations are available, for reduced drag and lower whirlpooling.

## Claims

1. A wave generating installation (100, 200, 201, 230, 240, 250, 260, 270, 300, 370) configured to generate a wave in water, the installation including:
a pool (132) which houses a body of water (130);
a carousel (102, 202, 252, 262, 272, 302, 372) provided in the pool and configured to rotate about an upright axis of rotation;
at least one wave former (120, 220, 242) fixed relative to the carousel and therefore configured to rotate with the carousel, wherein the at least one wave former is configured to form an incoming stream of water (112, 212, 232, 312) into a standing wave (124, 234, 244, 324);
a water outlet (110, 210, 231, 310) spaced away from the at least one wave former, the water outlet being configured to direct a stream of water over part of the carousel towards the at least one wave former; and
at least one water pump (140) connected via a water conduit to the water outlet, thereby to produce the stream of water,
wherein the installation is configured to direct the stream of water over the rotating carousel towards the at least one wave former, thereby to generate the wave which is a standing wave relative to the carousel but which rotates with the carousel; and
wherein the stream of water is drawn from the body of water and tail water (122, 222, 322) returns to the body of water, in a circular and repeating loop.

2. The wave generating apparatus as claimed in claim 1, in which the water outlet is configured to rotate with the carousel, such that the stream of water remains directed at the at least one wave former while the carousel rotates.

3. The wave generating installation (100, 230, 240, 250) as claimed in any of claims 1-2, in which:
the at least one wave former (120, 242) is provided at a periphery of the carousel; and
the water outlet (110, 231, 310) is provided at a centre of the carousel inwardly of the at least one wave former and is configured to direct the stream of water outwardly towards the at least one wave former.

4. The wave generating installation (200, 201) as claimed in any of claims 1-2, in which:
the water outlet (210) is elongate and is provided on the carousel between a centre and a periphery thereof,
the at least one wave former (220) is also provided on the carousel between a centre and a periphery thereof, the water outlet being configured to direct the stream of water circumferentially towards the at least one wave former.

5. The wave generating installation (201, 250) as claimed in any one of claims 1-4, which includes plural water outlets (110, 210) and plural wave formers (120, 220) spaced circumferentially apart, wherein the water outlets are configured to direct respective water streams to the wave formers.

6. The wave generating installation as claimed in any one of claims 1-5, wherein the water outlet is configured to create sheet flow of water over a water flow zone (114, 214, 254, 314, 384) of the carousel arranged between the water outlet and the wave former.

7. The wave generating installation as claimed in claim 6, wherein the carousel defines at least one raised zone (256, 385) rotationally adjacent to the water flow zone, the water flow zone being in the form of a trough being depressed or lowered compared to the adjacent raised zone.

8. The wave generating installation as claimed in any one of claims 1-7, wherein the water outlet emits water around most or all of a rotational area of the carousel, but the stream of water directed towards the at least one wave former includes more water than water emissions not directed to the at least one wave former.

9. The wave generating installation as claimed in any one of claims 1-8, wherein the stream of water has a positive flow rate and a raised pressure head upon being emitted from the water outlet.

10. The wave generating installation as claimed in any one of claims 1-9, wherein the carousel is configured to energise the stream of water additionally by downward gravitational flow and/or by Coriolis effect.

11. The wave generating installation as claimed in any one of claims 1-2, which includes a hub (104) at a centre of the carousel.

12. The wave generating installation as claimed in claim 11, in which:
the hub is integrated with or fixed to the carousel, the hub thereby being configured to rotate with the carousel; or
the carousel is displaceable relative to the hub and the hub is fixed, the carousel thus being configured to rotate around the hub.

13. The wave generating installation as claimed in claim 12, in which the hub accommodates the water outlet.

14. The wave generating installation as claimed in any one of claims 1-12, wherein the water outlet is on or in the carousel.

15. The wave generating installation as claimed in any one of claims 1-14, which includes a hyperbaric seal provided between the carousel and the body of water.

16. The wave generating installation as claimed in any one of claims 1-15, wherein the at least one water pump includes vanes (344) attached to the carousel, such that rotation of the carousel in or on the body of water causes a pumping action.

17. A method of generating a wave in water, the method including:
rotating a carousel, provided in a pool which houses a body of water, about an upright axis of rotation;
providing at least one wave former fixed relative to the carousel and therefore configured to rotate with the carousel;
pumping, with at least one water pump via a water conduit, water to a water outlet, thereby to produce the stream of water;
directing the stream of water from the water outlet, which is spaced away from the wave former, over part of the carousel towards the wave former;
forming, by the wave former, the stream of water into a standing wave relative to the carousel but which rotates with the carousel; and
drawing the stream of water from the body of water and returning tail water to the body of water, in a circular and repeating loop.

## Patentansprüche

1. Wellenerzeugungsanlage (100, 200, 201, 230, 240, 250, 260, 270, 300, 370), die dazu konfiguriert ist, eine Welle in Wasser zu erzeugen, wobei die Anlage Folgendes enthält:
ein Becken (132), in dem eine Wassermasse (130) untergebracht ist;
ein Karussell (102, 202, 252, 262, 272, 302, 372), das in dem Becken bereitgestellt ist und dazu konfiguriert ist, sich um eine senkrechte Drehachse zu drehen;
mindestens einen Wellenbilder (120, 220, 242), der relativ zu dem Karussell feststeht und daher dazu konfiguriert ist, sich mit dem Karussell zu drehen, wobei der mindestens eine Wellenbilder dazu konfiguriert ist, einen eintretenden Wasserstrom (112, 212, 232, 312) zu einer stehenden Welle (124, 234, 244, 324) umzubilden;
einen Wasserauslass (110, 210, 231, 310), der von dem mindestens einen Wellenbilder beabstandet ist, wobei der Wasserauslass dazu konfiguriert ist, einen Wasserstrom über einen Teil des Karussells zu dem mindestens einen Wellenbilder hin zu leiten; und
mindestens eine Wasserpumpe (140), die über eine Wasserleitung mit dem Wasserauslass verbunden ist, um dadurch den Wasserstrom zu produzieren,
wobei die Anlage dazu konfiguriert ist, den Wasserstrom über das sich drehende Karussell zu dem mindestens einen Wellenbilder hin zu leiten, um dadurch die Welle zu erzeugen, die eine stehende Welle relativ zu dem Karussell ist, die sich aber mit dem Karussell dreht; und
wobei der Wasserstrom aus der Wassermasse gezogen wird und das Unterwasser (122, 222, 322) in einer kreisförmigen und sich wiederholenden Schleife zu der Wassermasse zurückkehrt.

2. Wellenerzeugungsvorrichtung nach Anspruch 1, wobei der Wasserauslass dazu konfiguriert ist, sich mit dem Karussell zu drehen, sodass der Wasserstrom auf den mindestens einen Wellenbilder gerichtet bleibt, während sich das Karussell dreht.

3. Wellenerzeugungsanlage (100, 230, 240, 250) nach einem der Ansprüche 1-2, wobei:
der mindestens eine Wellenbilder (120, 242) an einem Umfang des Karussells bereitgestellt ist; und
der Wasserauslass (110, 231, 310) an einer Mitte des Karussells einwärts des mindestens einen Wellenbildners bereitgestellt ist und dazu konfiguriert ist, den Wasserstrom nach außen zu dem mindestens einen Wellenbilder hin zu leiten.

4. Wellenerzeugungsanlage (200, 201) nach einem der Ansprüche 1-2, wobei:
der Wasserauslass (210) langgestreckt ist und an dem Karussell zwischen einer Mitte und einem Umfang davon bereitgestellt ist;
der mindestens eine Wellenbilder (220) auch an dem Karussell zwischen einer Mitte und einem Umfang davon bereitgestellt ist, wobei der Wasserauslass dazu konfiguriert ist, den Wasserstrom in Umfangsrichtung zu dem mindestens einen Wellenbilder hin zu leiten.

5. Wellenerzeugungsanlage (201, 250) nach einem der Ansprüche 1-4, die mehrere Wasserauslässe (110, 210) und mehrere Wellenbilder (120, 220) enthält, die in Umfangsrichtung beabstandet sind, wobei die Wasserauslässe dazu konfiguriert sind, jeweilige Wasserströme zu den Wellenbildern zu leiten.

6. Wellenerzeugungsanlage nach einem der Ansprüche 1-5, wobei der Wasserauslass dazu konfiguriert ist, eine Schichtströmung von Wasser über einer Wasserströmungszone (114, 214, 254, 314, 384) des Karussells zu erschaffen, die zwischen dem Wasserauslass und dem Wellenbilder angeordnet ist.

7. Wellenerzeugungsanlage nach Anspruch 6, wobei das Karussell mindestens eine erhöhte Zone (256, 385) definiert, die in Drehrichtung an die Wasserströmungszone angrenzt, wobei die Wasserströmungszone in Form einer Wanne vorliegt, die im Vergleich zu der angrenzenden erhöhten Zone vertieft oder abgesenkt ist.

8. Wellenerzeugungsanlage nach einem der Ansprüche 1-7, wobei der Wasserauslass Wasser um den größten Teil oder den gesamten Drehbereich des Karussells ausgibt, aber der Wasserstrom, der zu dem mindestens einen Wellenbilder hin geleitet wird, mehr Wasser enthält als Wasserausgaben, die nicht zu dem mindestens einen Wellenbilder hin geleitet werden.

9. Wellenerzeugungsanlage nach einem der Ansprüche 1-8, wobei der Wasserstrom eine positive Strömungsrate und eine erhöhte Druckhöhe aufweist, wenn er aus dem Wasserauslass ausgegeben wird.

10. Wellenerzeugungsanlage nach einem der Ansprüche 1-9, wobei das Karussell dazu konfiguriert ist, den Wasserstrom zusätzlich durch Schwerkraftströmung nach unten und/oder durch Coriolis-Effekt mit Energie zu versorgen.

11. Wellenerzeugungsanlage nach einem der Ansprüche 1-2, die eine Nabe (104) in einer Mitte des Karussells enthält.

12. Wellenerzeugungsanlage nach Anspruch 11, wobei:
die Nabe in das Karussell integriert oder daran befestigt ist, wobei die Nabe dazu konfiguriert ist, sich mit dem Karussell zu drehen; oder
das Karussell relativ zu der Nabe verschiebbar ist und die Nabe feststehend ist, wobei das Karussell somit dazu konfiguriert ist, sich um die Nabe zu drehen.

13. Wellenerzeugungsanlage nach Anspruch 12, wobei die Nabe den Wasserauslass aufnimmt.

14. Wellenerzeugungsanlage nach einem der Ansprüche 1-12, wobei sich der Wasserauslass auf oder in dem Karussell befindet.

15. Wellenerzeugungsanlage nach einem der Ansprüche 1-14, die eine hyperbare Dichtung enthält, die zwischen dem Karussell und der Wassermasse bereitgestellt ist.

16. Wellenerzeugungsanlage nach einem der Ansprüche 1-15, wobei die mindestens eine Wasserpumpe Schaufeln (344) enthält, die an dem Karussell angebracht sind, sodass eine Drehung des Karussells in oder auf der Wassermasse einen Pumpvorgang bewirkt.

17. Verfahren zum Erzeugen einer Welle in Wasser, wobei das Verfahren Folgendes enthält:
Drehen eines Karussells, das in einem Becken bereitgestellt ist, in dem eine Wassermasse untergebracht ist, um eine senkrechte Drehachse;
Bereitstellen mindestens eines Wellenbilders, der relativ zu dem Karussell feststeht und daher dazu konfiguriert ist, sich mit dem Karussell zu drehen;
Pumpen von Wasser mit mindestens einer Wasserpumpe über eine Wasserleitung zu einem Wasserauslass, um dadurch den Wasserstrom zu produzieren;
Leiten des Wasserstroms von dem Wasserauslass, der von dem Wellenbilder beabstandet ist, über einen Teil des Karussells zu dem Wellenbilder hin;
Umbilden, durch den Wellenbilder, des Wasserstroms zu einer stehenden Welle relativ zu dem Karussell, die sich aber mit dem Karussell dreht; und
Ziehen des Wasserstroms aus der Wassermasse und Zurückführen des Unterwassers in einer kreisförmigen und sich wiederholenden Schleife zu der Wassermasse.

## Revendications

1. Installation de génération de vague (100, 200, 201, 230, 240, 250, 260, 270, 300, 370) conçue pour générer une vague dans de l'eau, l'installation comprenant :
un bassin (132) qui abrite une masse d'eau (130) ;
un carrousel (102, 202, 252, 262, 272, 302, 372) ménagé dans le bassin et conçu pour tourner autour d'un axe de rotation vertical ;
au moins un dispositif de formation de vague (120, 220, 242) fixe par rapport au carrousel et par conséquent conçu pour tourner avec le carrousel, dans laquelle l'au moins un dispositif de formation de vague est conçu pour former un flux d'eau entrant (112, 212, 232, 312) en une vague stationnaire (124, 234, 244, 324) ;
une sortie d'eau (110, 210, 231, 310) espacée de l'au moins un dispositif de formation de vague, la sortie d'eau étant conçue pour diriger un flux d'eau au-dessus d'une partie du carrousel vers l'au moins un dispositif de formation de vague ; et
au moins une pompe à eau (140) reliée par l'intermédiaire d'une conduite d'eau à la sortie d'eau, pour produire ainsi le flux d'eau,
dans laquelle l'installation est conçue pour diriger le flux d'eau au-dessus du carrousel en rotation vers l'au moins un dispositif de formation de vague, pour générer ainsi la vague qui est une vague stationnaire par rapport au carrousel mais qui tourne avec le carrousel ; et
dans laquelle le flux d'eau est tiré de la masse d'eau et de l'eau de traîne (122, 222, 322) retourne à la masse d'eau, dans une boucle circulaire et répétitive.

2. Appareil de génération de vague selon la revendication 1, où la sortie d'eau est conçue pour tourner avec le carrousel, de sorte que le flux d'eau reste dirigé vers l'au moins un dispositif de formation de vague pendant que le carrousel tourne.

3. Installation de génération de vague (100, 230, 240, 250) selon l'une quelconque des revendications 1 et 2, où :
l'au moins un dispositif de formation de vague (120, 242) est ménagé au niveau d'une périphérie du carrousel ; et
la sortie d'eau (110, 231, 310) est ménagée au niveau d'un centre du carrousel vers l'intérieur de l'au moins un dispositif de formation de vague et est conçue pour diriger le flux d'eau vers l'extérieur vers l'au moins un dispositif de formation de vague.

4. Installation de génération de vague (200, 201) selon l'une quelconque des revendications 1 et 2, où :
la sortie d'eau (210) est allongée et est ménagée sur le carrousel entre un centre et une périphérie de celui-ci ;
l'au moins un dispositif de formation de vague (220) est également ménagé sur le carrousel entre un centre et une périphérie de celui-ci, la sortie d'eau étant conçue pour diriger le flux d'eau de manière circonférentielle vers l'au moins un dispositif de formation de vague.

5. Installation de génération de vague (201, 250) selon l'une quelconque des revendications 1 à 4, qui comprend plusieurs sorties d'eau (110, 210) et plusieurs dispositifs de formation de vague (120, 220) espacés de manière circonférentielle, dans laquelle les sorties d'eau sont conçues pour diriger des flux d'eau respectifs vers les dispositifs de formation de vague.

6. Installation de génération de vague selon l'une quelconque des revendications 1 à 5, dans laquelle la sortie d'eau est conçue pour créer un écoulement en nappe d'eau sur une zone d'écoulement d'eau (114, 214, 254, 314, 384) du carrousel agencée entre la sortie d'eau et le dispositif de formation de vague.

7. Installation de génération de vague selon la revendication 6, dans laquelle le carrousel définit au moins une zone élevée (256, 385) adjacente en rotation à la zone d'écoulement d'eau, la zone d'écoulement d'eau présentant la forme d'une auge étant creusée ou abaissée par rapport à la zone élevée adjacente.

8. Installation de génération de vague selon l'une quelconque des revendications 1 à 7, dans laquelle la sortie d'eau émet de l'eau autour de la majeure partie ou de la totalité d'une zone de rotation du carrousel, mais le flux d'eau dirigé vers l'au moins un dispositif de formation de vague comprend plus d'eau que d'émissions d'eau non dirigées vers l'au moins un dispositif de formation de vague.

9. Installation de génération de vague selon l'une quelconque des revendications 1 à 8, dans laquelle le flux d'eau présente un débit positif et une charge de pression élevée lorsqu'il est émis par la sortie d'eau.

10. Installation de génération de vague selon l'une quelconque des revendications 1 à 9, dans laquelle le carrousel est conçu pour exciter le flux d'eau en plus par écoulement gravitationnel descendant et/ou par effet Coriolis.

11. Installation de génération de vague selon l'une quelconque des revendications 1 et 2, qui comprend un moyeu (104) au centre du carrousel.

12. Installation de génération de vague selon la revendication 11, où :
le moyeu est intégré ou fixé au carrousel, le moyeu étant ainsi conçu pour tourner avec le carrousel ; ou
le carrousel est déplaçable par rapport au moyeu et le moyeu est fixe, le carrousel étant ainsi conçu pour tourner autour du moyeu.

13. Installation de génération de vague selon la revendication 12, où le moyeu reçoit la sortie d'eau.

14. Installation de génération de vague selon l'une quelconque des revendications 1 à 12, dans laquelle la sortie d'eau est sur le carrousel ou dans celui-ci.

15. Installation de génération de vague selon l'une quelconque des revendications 1 à 14, qui comprend un joint hyperbare ménagé entre le carrousel et la masse d'eau.

16. Installation de génération de vague selon l'une quelconque des revendications 1 à 15, dans laquelle l'au moins une pompe à eau comprend des aubes (344) attachées au carrousel, de sorte que la rotation du carrousel dans la masse d'eau ou au-dessus de celle-ci entraîne une action de pompage.

17. Procédé de génération d'une vague dans de l'eau, le procédé comprenant :
la rotation d'un carrousel, ménagé dans un bassin qui abrite une masse d'eau, autour d'un axe de rotation vertical ;
la fourniture d'au moins un dispositif de formation de vague fixe par rapport au carrousel et par conséquent conçu pour tourner avec le carrousel ;
le pompage, avec au moins une pompe à eau par l'intermédiaire d'une conduite d'eau, d'eau vers une sortie d'eau, pour produire ainsi le flux d'eau ;
la direction du flux d'eau de la sortie d'eau, qui est espacée du dispositif de formation de vague, au-dessus d'une partie du carrousel vers le dispositif de formation de vague ;
la formation, par le dispositif de formation de vague, du flux d'eau en une vague stationnaire par rapport au carrousel mais qui tourne avec le carrousel ; et
le tirage du flux d'eau de la masse d'eau et le renvoi d'eau de traîne à la masse d'eau, dans une boucle circulaire et répétitive.
